# EUROPEAN PATENT SPECIFICATION

(11) **EP 2 683 766 B1**
(45) Date of publication and mention of the grant of the patent: **08.07.2015**
(21) Application number: 12732881.3
(22) Date of filing: 28.05.2012
(51) Int. Cl.: C08K 3/22, C08K 3/36

(54) **ORGANIC-INORGANIC COMPOSITE MOLDED PRODUCT AND OPTICAL ELEMENT**
ORGANISCH-ANORGANISCHES VERBUNDSTOFF-FORMPRODUKT UND OPTISCHES ELEMENT
PRODUIT MOULÉ COMPOSITE ORGANIQUE-INORGANIQUE ET ÉLÉMENT OPTIQUE

(30) Priority: 15.06.2011 JP 2011133485; 19.04.2012 JP 2012096092
(43) Date of publication of application: 15.01.2014
(73) Proprietor: Canon Kabushiki Kaisha, Tokyo 146-8501 (JP)
(72) Inventor: KISO, Shigeo, Tokyo 146-8501 (JP); HOSOKAWA, Katsumoto, Tokyo 146-8501 (JP); KUMAGAI, Takeaki, Tokyo 146-8501 (JP); KOJIMA, Takahiro, Tokyo 146-8501 (JP); OISHI, Emi, Tokyo 146-8501 (JP)
(74) Representative: WESER & Kollegen
(86) International application number: PCT/JP2012/003457
(87) International publication number: WO 2012/172737

(56) References cited:
- JP-A- 2006 160 779

## Description

### Technical Field

The present invention relates to an organic-inorganic composite molded product having a low coefficient of linear expansion and an optical element.

### Background Art

In general, although many substances are expanded by heating, it has been known that the coefficient of linear expansion of an organic resin material is particularly high. For example, in a device represented by a device used for a precision optical system, in the case in which a member formed from an organic resin material is used, when the change in dimension thereof is large due to the change in temperature, the optical system may be disadvantageously displaced thereby. When a member used for a precision optical system is formed only from an organic resin material, the coefficient of linear expansion thereof is desired to be 20*10⁻⁶/degree Celsius or less.

As a method to solve this problem, in PTL 1, a method has been disclosed in which an organic-inorganic composite material is formed by adding an inorganic material, such as inorganic fine particles, to an organic resin material to decrease the coefficient of linear expansion of the composite material.

However, in this case, in order to decrease the coefficient of linear expansion of the organic resin to 20*10⁻⁶/degree Celsius or less, even if silica, which has a low specific gravity, is used, a large amount thereof, such as approximately 80 percent by weight (71 vol%), has to be added based on simple calculation using the volume fraction. Since a problem occurs in that bulk moldability of a thermoplastic resin is remarkably degraded by addition of a large amount of inorganic fine particles, it has been practically difficult to obtain a molded product having a coefficient of linear expansion of 20*10⁻⁶/degree Celsius or less.

In addition, as disclosed in PTL 1, when a thermosetting resin, such as an epoxy resin or a phenol resin, is used as the organic resin material, deformation of the molded product is increased due to curing shrinkage of the resin. In general, since the curing generally takes a long time, a molding cost relating to the curing is also increased. From these points described above, it has been difficult to form an optical element or the like which is required to have a high shape accuracy.

### Citation List

### Patent Literature

PTL 1: Japanese Patent Laid-Open No. 2006-291197

### Summary of Invention

The present invention provides an organic-inorganic composite molded product having a low average coefficient of linear expansion.

The present invention provided an organic-inorganic composite molded product formed by molding a composite material including an organic resin and inorganic fine particles, and in the organic-inorganic composite molded product, the average primary particle diameter of the inorganic fine particles is 1 to 30 nm, the concentration of the inorganic fine particles is 25 to 50 percent by volume, and the porosity is 20 to 55 percent by volume.

According to the present invention, an organic-inorganic composite molded product having a small content of inorganic fine particles and a significantly low average coefficient of linear expansion can be provided.

The organic-inorganic composite molded product of the present invention can be preferably used as a low-expansion member and a temperature compensating member used for devices, such as an optical fiber, a lens, and a mirror, of a precision optical system.

Further features of the present invention will become apparent from the following description of exemplary embodiments with reference to the attached drawings.

### Brief Description of Drawings

[fig.1]Fig. 1 is a graph showing the relationship between the porosity (percent by volume) and the coefficient of linear expansion of an organic-inorganic composite molded product.
[fig.2]Fig. 2 is a graph showing the relationship between the fine particle concentration (percent by volume) and the coefficient of linear expansion of the organic-inorganic composite molded product.
[fig.3A]Fig. 3A is a cross-sectional view of an optical element formed of an organic-inorganic composite molded product.
[fig.3B]Fig. 3B is a perspective view of an optical element formed of an organic-inorganic composite molded product.
[fig.3C]Fig. 3C is a perspective view of an optical element formed of an organic-inorganic composite molded product.

### Description of Embodiments

Next, embodiments of the invention will be described in detail.

According to the present invention, in an organic-inorganic composite molded product formed from an organic resin and inorganic fine particles, inorganic fine particles having an average primary particle diameter of 1 to 30 nm are used, the concentration of the inorganic fine particles is 25 to 50 percent by volume, and in the composite, pores having a volume of 20 to 55 percent by volume thereof are provided. Accordingly, a significantly low average coefficient of linear expansion of 20*10⁻⁶ to - 110*10⁻⁶/degree Celsius can be realized.

The reason for this is believed that fine pore structures formed by addition of inorganic fine particles having an appropriate particle diameter and concentration are shrunk. It is believed that by this negative expansion property, an effect of absorbing and suppressing a positive thermal expansion property of the organic resin itself present around the pore structures formed by the fine particles can be obtained.

In addition, when the volume of the pores occupied in the organic-inorganic composite molded product is smaller than 20 percent by volume, the effect of decreasing the average coefficient of linear expansion is reduced. In addition, when the volume of the pores is more than 55 percent by volume, the organic-inorganic composite molded product becomes very fragile; hence, the strength as the molded product cannot be maintained, and it becomes difficult to perform molding from an industrial point of view.

In addition, when the average primary particle diameter of the inorganic fine particles is more than 30 nm, the effect of decreasing the average coefficient of linear expansion is reduced. The reason for this is believed that when the particle diameter is increased, the fine pore structures cannot be formed in the organic-inorganic composite molded product, and as a result, the effect of absorbing and suppressing the positive expansion property of the organic resin is reduced. In addition, it is also believed that reduction of the surface effect which is particular for nanoparticles also has some influence on the above phenomenon.

Furthermore, when the average primary particle diameter is smaller than 1 nm, it becomes very difficult to uniformly disperse 25 percent by volume or more of the inorganic fine particles in the organic resin without causing any agglomeration. In addition, in the case described above, since fine pore structures having a sufficient volume cannot be formed in the organic-inorganic composite molded product, the effect of decreasing the average coefficient of linear expansion of the composite is reduced.

Although embodiments of the invention will be described in detail, the organic-inorganic composite molded product of the present invention is not limited thereto at all.

### Organic Resin

As the organic resin used in the present invention, any one of an energy curable resin and a thermoplastic resin may be selected. When a thermoplastic resin is used, since the coefficient of linear expansion of the resin itself is high, the coefficient of linear expansion of the composite can be more decreased.

As the thermoplastic resin, for example, an acrylate resin, a polycarbonate resin, a cyclic olefin resin, a polyether resin, a polythioether resin, a polyester resin, or a polyolefin resin is preferable. In addition, mixtures formed by mixing some of the above resins or copolymers formed therefrom may also be used. Although the molecular weight of the thermoplastic resin is not particularly limited, when the moldability and the strength of the molded product are taken into consideration, the number average molecular weight is preferably 3,000 or more.

In addition, the glass transition temperature of the thermoplastic resin used in the present invention is preferably 80 to 300 degrees Celsius and more preferably 100 to 200 degrees Celsius particularly from a moldability point of view. When the glass transition temperature is 80 degrees Celsius or less, sufficient heat resistance may not be obtained under usage environment after the molding. On the other hand, when the glass transition temperature is more than 300 degrees Celsius, a high temperature process must be performed for molding operation, and in addition to that, a problem in that the resin itself is denatured and/or discolored may occur in some cases.

Additives may also be contained in the thermoplastic resin used in the present invention. As the additives, for example, there may be mentioned a phosphorus-based processing thermal stabilizer, a processing thermal stabilizer such as a hydroxylamine, an antioxidant such as a hindered phenol, a light stabilizer such as a hindered amine, an ultraviolet ray absorber, such as a benzotriazole, a triazine, a benzophenone, or a benzoate, a plasticizer, such as a phosphoric ester, a phthalic ester, a citrate ester, or a polyester, a release agent such as a silicone, a flame retardant, such as a phosphoric ester, or a melamine, an antistatic agent such as a fatty ester-based surfactant, an organic dye colorant, and an impact modifier.

The additives mentioned above may be used alone or in combination. The total amount of the additives is preferably adjusted so that the concentration thereof is 10 percent by weight or less of the organic-inorganic composite material to be manufactured. When the amount of the additives is more than 10 percent by weight, the physical properties of the thermoplastic composite material after the addition are considerably changed from the intrinsic physical properties of a thermoplastic resin to be used, and desired properties, such as the lightweight property, strength, and coefficient of linear expansion of the material, may not be obtained in some cases.

### Inorganic Fine Particles

As the inorganic fine particles used in the present invention, for example, metal fine particles, metal oxide fine particles, and fillers may be mentioned. In particular, when an organic-inorganic composite material formed as in the present invention is used for optical application, metal oxide fine particles are suitably used since having small optical absorption in a visible light region as compared to that of metal fine particles. As the metal oxide fine particles described above, although metal oxide fine particles, such as silicon oxide, zirconium oxide, aluminum oxide, titanium oxide, yttrium oxide, hafnium oxide, and niobium oxide, may be mentioned, the metal oxide fine particles are not limited thereto. In addition, composite oxide fine particles, such as zirconium silicate, zirconium phosphate, indium tin oxide, strontium titanate, and yttrium aluminum garnet (YAG), may also be used. Furthermore, the above metal oxide fine particles doped with metal elements may also be used. As the fillers, for example, clay, such as kaolin or montmorillonite, carbon fibers, glass fibers, and glass fillers may be used. In addition, a plurality of these inorganic fine particles mentioned above may be mixed in combination for the use.

Although the composition and the crystallinity of the above inorganic fine particles are not particularly limited, depending on physical properties required for the organic-inorganic composite material, such as optical properties including the refractive index and transmittance and mechanical properties including the coefficient of linear expansion, the inorganic fine particles may be appropriately selected.

When tine particles are mixed in an organic resin, in order to improve the dispersibility, surface modification of the fine particles is generally performed. However, in order to decrease the coefficient of linear expansion, excessive surface modification is not preferable, and furthermore the coefficient of linear expansion of the organic-inorganic composite molded product may be adversely increased thereby. In addition, it was also found that the effect of decreasing the coefficient of linear expansion was considerably changed depending on the type of surface modification group. The reason for this is believed that the influence of the surface interaction effect between the organic resin and the inorganic fine particles or among the inorganic fine particles and the dispersion state of the inorganic fine particles are considerably changed depending on the type of surface modification group. In the present invention, although the surface modification groups are not particularly limited, in order to more significantly decrease the coefficient of linear expansion, fine particles having surfaces modified with an amino group or a hexadecyl group are preferable. In addition, fine particles only having a hydroxyl group as the surface modification group are also preferable.

The average primary particle diameter of the inorganic fine particles used in the present invention is preferably 1 to 30 nm. The average primary particle diameter in this embodiment indicates the sphere equivalent volume diameter of particles which are not agglomerated. When the primary particle diameter of the tine particles is less than 1 nm, the crystallinity thereof collapses, and the physical properties as the inorganic material are not obtained. In addition, when the fine particles are dispersed in the organic resin, since the number thereof present per unit volume is remarkably increased, the distance between the fine particles is decreased, and hence agglomeration thereof is liable to occur. Therefore, the volume concentration of the fine particles in the organic-inorganic composite material cannot be increased, and as a result, the optical properties or the mechanical properties derived from the inorganic fine particles cannot be sufficiently improved. On the other hand, if the primary particle diameter is more than 30 nm, light scattering caused by the fine particles is enhanced, and as a result, sufficient transparency cannot be ensured for the organic-inorganic composite molded product to be used as an optical material. In addition, in the present invention, the fine pore structures cannot be formed in the organic-inorganic composite molded product, and the effect of decreasing the linear expansion is reduced.

Although the inorganic fine particles used in the present invention may be in the form of a powder or a fine particle dispersion liquid when being mixed in the organic resin, in order to more highly disperse the fine particles in the organic resin as the organic-inorganic composite material, a fine particle dispersion liquid in which the fine particles are dispersed in a solvent is preferably used since a higher dispersion state can be relatively easily obtained. In this case, the fine particle dispersion liquid to be used is preferably processed beforehand by a dispersion process using an atomization dispersing device or the like to obtain a high dispersion state and a high transparency state of the fine particle dispersion liquid. As the atomization dispersing device to be used in this case, various dispersing devices, such as a bead mill, a jet mill, a disc mill, a homogenizer, and an ultrasonic treatment device, may be used.

### Mixing of Organic Resin and Inorganic Fine Particles

A method for mixing the organic resin and the inorganic fine particles is not particularly limited. However, since the inorganic fine particles used in the present invention have a very small particle diameter and are liable to agglomerate with each other, the following liquid dispersion method or melt dispersion method is preferably used.

Mixing of the organic resin and the inorganic fine particles by the liquid dispersion method is performed in such a way that after the inorganic fine particles are mixed with a resin solution in which the organic resin is dissolved in a solvent, the solvent is removed. As the solvent to be used, any solvents may be used as long as capable of dissolving the organic resin, and for example, when the organic resin is a poly(methyl methacrylate) (PMMA), acetone, toluene, tetrahydrofuran, ethyl acetate, butyl acetate, xylene, dimethylformamide, and the like may be mentioned. Since a residual solvent may adversely increase the coefficient of linear expansion, the solvent has to be reliably removed by heating and/or under reduced pressure. Therefore, in consideration of the sufficient removal of the solvent, a solvent having a relatively low boiling point is preferable.

The inorganic fine particles may be directly mixed in the resin solution, or as described above, the fine particle dispersion liquid in which the inorganic fine particles are dispersed beforehand in a solvent may be mixed with the resin solution. In this case, the amount of the solvent to be used is not particularly limited and may be additionally added, if needed, as long as it can be finally removed. Even after the fine particles or the fine particle dispersion liquid is mixed with the resin solution, a dispersion process is preferably performed using various atomization dispersing devices. As the atomization dispersing device to be used, as is the case of the fine particle dispersion liquid, various dispersing devices, such as a bead mill, a jet mill, a disc mill, a homogenizer, and an ultrasonic treatment device, may be used.

Mixing of the organic resin and the inorganic fine particles by the melt dispersion method is performed in such a way that the fine particles are charged in the organic resin in a molten state by heating and are then dispersed therein by applying a shearing force. In this case, as in the liquid dispersion method, the fine particles in the form of a powder may be directly charged, or the fine particles in the form of a fine particle dispersion liquid may be charged. When the fine particles in the form of a fine particle dispersion liquid is charged, a mechanism, such as a ventilation mechanism, to remove a solvent used for the dispersion liquid must be provided in a melt dispersing device.

In addition, in order to prevent resin degradation caused by heating for melting, gases in a melting atmosphere are preferably replaced with a N₂ gas, an inert gas, or the like. In order to highly disperse the fine particles in the organic resin, although it is better to increase the shearing force, for this purpose, the melt viscosity is preferably decreased. Since a decrease in viscosity by an increase in melting temperature promotes denaturation and/or degradation of the resin, introduction of gas is most effective to decrease the melt viscosity. As a plasticization promotion gas, a supercritical gas, such as a supercritical CO₂, is preferable. As a device which performs the above melt dispersion, for example, a roll mill, a kneader, a mixer, a twin screw extruder, and a multi-screw extruder may be mentioned.

Although a mixing ratio of the inorganic fine particles to the organic resin is appropriately selected in consideration of desired optical properties and mechanical properties of the organic-inorganic composite material, mixing is performed so that the ratio is 25 percent by volume or more. When the content of the inorganic fine particles is 25 percent by volume or more, the average coefficient of linear expansion of the organic-inorganic composite molded product thus formed is considerably decreased. In order to reliably decrease the coefficient of linear expansion, although an increase of the content of the inorganic fine particles is effective, the organic-inorganic composite molded product becomes fragile and the moldability is degraded as the content is increased, and hence the content is preferably 50 percent by volume or less. In addition, even if the content of one organic-inorganic composite molded product is the same as that of the other one, depending on the dispersion state of the inorganic fine particles, the coefficient of linear expansion may be different from each other in some cases.

### Molding

A material obtained by mixing the inorganic fine particles and the organic resin can be molded by a known method, such as injection molding and heat press molding. In particular, the organic-inorganic composite material charged in a molding die is molded into any shape by pressure application and heating at the glass transition temperature or more. When the temperature in molding is too low, a target shape cannot be transferred, and when the temperature is too high, the coefficient of linear expansion tends to be adversely increased; hence, the temperature is preferably in a range of 150 to 300 degrees Celsius. Although the molding pressure is not particularly limited, in order to transfer a die shape, the pressure is preferably 50 MPa or more. In addition, as the shape of the molded product, various forms, such as a sphere, a rod, a plate, a block, a tube, a spindle, a fiber, a grid, a film, and a sheet, can be molded and can be used as interior/exterior components used for various precision apparatuses and optical elements.

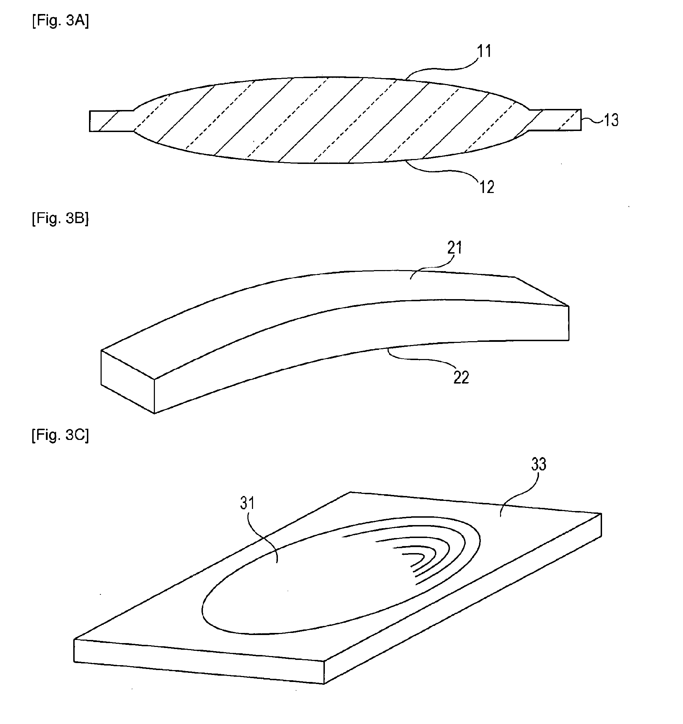

The molded product may be used, for example, for an axisymmetric lens, such as an EF lens, shown in Fig. 3A which transmits light and which is used for a camera, a video, or the like, a toric lens shown in Fig. 3B, or a reflective mirror which reflects light shown in Fig. 3C. Fig. 3A shows a cross-section of the lens in which reference numeral 11 indicates a first optical surface, reference numeral 12 indicates a second optical surface, and reference numeral 13 indicates a holding portion. Fig. 3B is a perspective view of the toric lens in which reference numeral 21 indicates a first optical surface, and reference numeral 22 indicates a second optical surface. Fig. 3C is a perspective view of the reflective mirror in which reference numeral 31 indicates a first mirror surface, and reference numeral 33 indicates a holding portion.

### Measurement Method of Porosity

The porosity of the organic-inorganic composite molded product of the present invention is computed from a pore distribution measurement result obtained by a mercury porosimeter. The mercury porosimeter is a device which measures a pore distribution by pressing mercury into pores of a porous body.

The content of the inorganic fine particles of the present invention is obtained in such a way that a residual weight percentage is measured when the temperature of the molded product is increased to 800 degrees Celsius by a thermogravimetric analysis (TGA) device and is then converted into a volume conversion value (converted into percent by volume) in consideration of the porosity (percent by volume). That is, the percents by volume of the "organic resin", the "inorganic fine particles", and the "pores" of the present invention indicate the volume ratios of the respective components when the total volume of the three components in the organic-inorganic composite molded product is assumed to be 100%.

### Measurement Method of Average Coefficient of Linear Expansion

By a thermomechanical analyzer TMA (TMA Q400, manufactured by TA Instrument Co., Ltd.), after three temperature cycles between 0 to 80 degrees Celsius were applied, the average coefficient of linear expansion in a thickness direction was computed between 20 to 60 degrees Celsius. An expansion probe was used for measurement of the displacement.

### Measurement Method of Content of Inorganic Fine Particles

Measurement of the content of the inorganic fine particles was performed using a TGA (TGA Q500, manufactured by TA Instrument Co., Ltd.). When the content of the inorganic fine particles was converted from the percent by weight (wt%) to the percent by volume (vol%), as the specific gravity value of each material, 1.19, 1.01, 1.20, 1.05, 2.00, and 5.56 were used for a PMMA resin, a cyclic olefin resin, a polycarbonate resin, a polystyrene resin, SiO₂ fine particles, and ZrO₂ fine particles, respectively. In addition, each molded product was cut into an appropriate size and was then evaluated.

### Examples

Hereinafter, the present invention will be further described in detail with reference to Examples and Comparative Examples. However, the present invention is not limited to these Examples at all.

### Example 1

A PMMA resin (the trade name: Delpet 70NH, manufactured by Asahi Kasei Chemicals Corporation) used as the organic resin was mixed with acetone to have a concentration of 5 wt% and was dissolved therein at ordinary temperature by an ultrasonic treatment, so that a PMMA/acetone solution was prepared.

As the inorganic fine particles, SiO₂ fine particles surface-modified with an amino group (the trade name: Aerosil RA200H, average primary particle diameter of 12 nm, manufactured by Nippon Aerosil Co., Ltd.) were mixed with acetone to have a concentration of 5 wt%, so that a (fine particles/acetone) liquid was prepared.

To 10 g of the PMMA/acetone solution thus prepared, 25 g of the (fine particles/ acetone) liquid was dripped, and mixing was sufficiently performed using an ultrasonic treatment device. After the acetone in a mixed liquid was spontaneously dried, heating was performed at approximately 210 degrees Celsius for 4 hours in a vacuum furnace to remove the residual solvent, so that a (PMMA/fine particles) mixed material was obtained.

A release agent (the trade name: Novec-1720, manufactured by Sumitomo 3M Limited) was dripped on a surface of a press molding die having a diameter of 15 mm and was then sufficiently wiped off. The (PMMA/fine particles) mixed material in an amount of 0.2 g was charged in the press molding die, and while the die was set in a compact heat press machine (the trade name: AH-2003, manufactured by As One Corporation), the temperature was increased to 250 degrees Celsius. After the temperatures of an upper surface and a lower surface of the compact heat press machine reached 250 degrees Celsius, a load of 110 MPa was applied and was spontaneously released while cooling by wind was performed to 100 degrees Celsius. The load was completely released at 100 degrees Celsius, and the (PMMA/fine particles) mixed material was recovered from the die, so that an organic-inorganic composite molded product having a coin shape was obtained. The fine particle concentration in this molded product was 48.2 percent by volume (71.8 wt%), and the moldability was good. In addition, the porosity of this molded product was 20.0 percent by volume.

### Example 2

A molded product was obtained in a manner similar to that in Example 1 except that 21 g of the (fine particles/acetone) liquid was added to 14 g of the PMMA/acetone solution. The fine particle concentration in this molded product was 25.0 percent by volume (60.0 wt%), and the moldability was good. In addition, the porosity of this molded product was 47.0 percent by volume.

### Example 3

A molded product was obtained in a manner similar to that in Example 1 except that 25 g of the (fine particles/acetone) liquid was added to 10 g of the PMMA/acetone solution. The fine particle concentration in this molded product was 38.6 percent by volume (71.8 wt%), and the moldability was good. In addition, the porosity of this molded product was 36.0 percent by volume.

### Example 4

A molded product was obtained in a manner similar to that in Example 1 except that the inorganic fine particles were changed to SiO₂ fine particles with no surface modification (the trade name: Aerosil 300, average primary particle diameter of 7 nm, manufactured by Nippon Aerosil Co., Ltd.) and that 21 g of the (fine particles/acetone) liquid was added to 14 g of the PMMA/acetone solution. The fine particle concentration in this molded product was 27.4 percent by volume (60.0 wt%), and the moldability was good. In addition, the porosity of this molded product was 42.0 percent by volume.

### Example 5

A molded product was obtained in a manner similar to that in Example 1 except that the inorganic fine particles were changed to SiO₂ fine particles with no surface modification (the trade name: Aerosil 200, average primary particle diameter of 12 nm, manufactured by Nippon Aerosil Co., Ltd.), and that 21 g of the (fine particles/ acetone) liquid was added to 14 g of the PMMA/acetone solution. The fine particle concentration in this molded product was 25.9 percent by volume (60.0 wt%), and the moldability was good. In addition, the porosity of this molded product was 45.0 percent by volume.

### Example 6

A molded product was obtained in a manner similar to that in Example 1 except that the inorganic fine particles were changed to SiO₂ fine particles surface-modified with a hexadecyl group (the trade name: Aerosil 200, average primary particle diameter of 12 nm, manufactured by Nippon Aerosil Co., Ltd.), and that 21 g of the (fine particles/ acetone) liquid was added to 14 g of the PMMA/acetone solution. The fine particle concentration in this molded product was 29.2 percent by volume (60.0 wt%), and the moldability was good. In addition, the porosity of this molded product was 38.0 percent by volume.

### Example 7

After particles of a cyclic olefin resin (the trade name: Zeonex E48R, manufactured by Zeon Corporation) and SiO₂ fine particles (the trade name: Aerosil 300, average primary particle diameter of 7 nm, manufactured by Nippon Aerosil Co., Ltd.) were mixed together so that the concentration of the SiO₂ fine particles was 75.6 wt% and were then uniformly stirred, this mixed powder was molded into a molded product under conditions similar to those in Example 1. The fine particle concentration in this molded product was 28.1 percent by volume (75.6 wt%), and the moldability was good. In addition, the porosity of this molded product was 54.0 percent by volume.

### Example 8

A molded body was obtained in a manner similar to that in Example 5 except that the organic resin was changed to a polycarbonate resin, and that 25 g of the (fine particles/ acetone) liquid was added to 10 g of a polycarbonate resin/acetone solution. The fine particle concentration in this molded product was 31.6 percent by volume (71.4 wt%), and the moldability was good. In addition, the porosity of this molded product was 33.0 percent by volume.

### Example 9

A molded body was obtained in a manner similar to that in Example 5 except that the organic resin was changed to a polystyrene resin, and that 24 g of the (fine particles/ acetone) liquid was added to 12 g of a polystyrene resin/acetone solution. The fine particle concentration in this molded product was 38.5 percent by volume (66.7 wt%), and the moldability was good. In addition, the porosity of this molded product was 30.0 percent by volume.

### Example 10

A molded body was obtained in a manner similar to that in Example 7 except that the inorganic fine particles were changed to ZrO₂ fine particles (the trade name: Zircox 15, average primary particle diameter of 15 nm, manufactured by IBU-tec). The fine particle concentration in this molded product was 26.0 percent by volume (85.0 wt%), and the moldability was good. In addition, the porosity of this molded product was 45.0 percent by volume.

### Comparative Example 1

A molded product was obtained in a manner similar to that in Example 1 except that 25 g of the (tine particles/acetone) liquid was added to 5 g of the PMMA/acetone solution. The fine particle concentration in this molded product was 64.8 percent by volume (83.3 wt%), and there was a problem to some extent in moldability. In addition, the porosity of this molded product was 13.0 percent by volume.

### Comparative Example 2

A molded product was obtained in a manner similar to that in Example 5 except that 10.8 g of the (fine particles/acetone) liquid was added to 25.2 g of the PMMA/acetone solution. The fine particle concentration in this molded product was 19.3 percent by volume (30.0 wt%), and the moldability was good. In addition, the porosity of this molded product was 5.0 percent by volume.

### Comparative Example 3

A molded product was obtained in a manner similar to that in Example 5 except that the inorganic fine particles were changed to SiO₂ fine particles with no surface modification (the trade name: Aerosil OX50, average primary particle diameter of 40 nm, manufactured by Nippon Aerosil Co., Ltd.), and that 21 g of the (fine particles/ acetone) liquid was added to 14 g of the PMMA/acetone solution. The fine particle concentration in this molded product was 44.8 percent by volume (60.0 wt%), and the moldability was good. In addition, the porosity of this molded product was 5.0 percent by volume.

### Evaluation

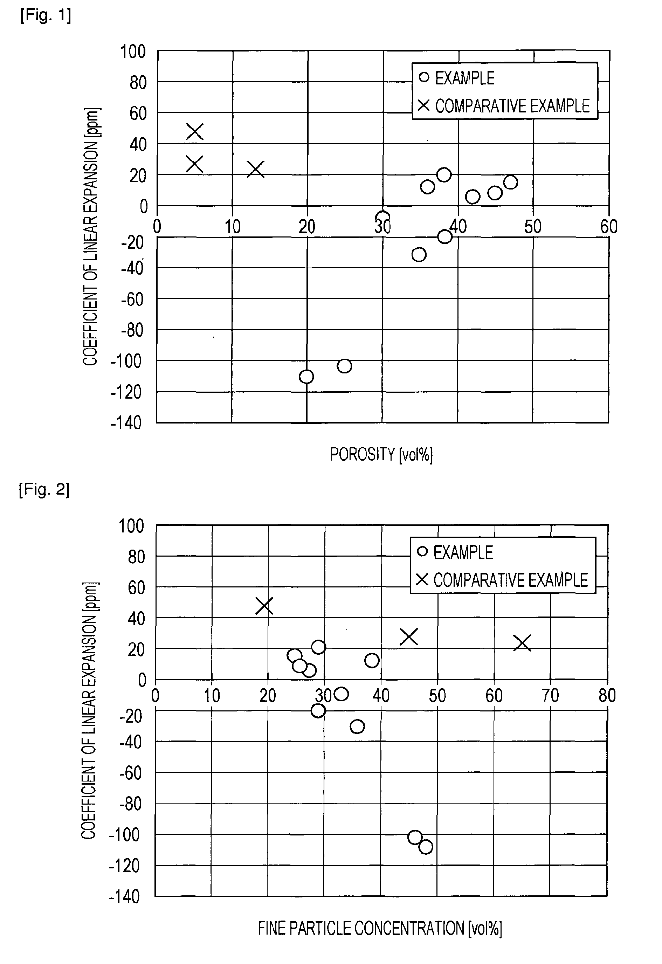

Evaluation results of the molded products of Examples 1 to 10 and Comparative Examples 1 to 3 are shown in Table 1 and Figs. 1 and 2. In Fig. 1, the horizontal axis indicates the porosity (percent by volume), the vertical axis indicates the average coefficient of linear expansion (ppm/degree Celsius), the results of Examples 1 to 10 are represented by O, and the results of Comparative Examples 1 to 3 are represented by *. In addition, in Fig. 2, the horizontal axis indicates the fine particle concentration (percent by volume), the vertical axis indicates the average coefficient of linear expansion (ppm/degree Celsius), the results of Examples 1 to 10 are represented by O, and the results of Comparative Examples 1 to 3 are represented by *.

**[Table 1]**

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|
| Particles | SiO2 | SiO2 | SiO2 | SiO2 | SiO2 | SiO2 | SiO2 | SiO2 | SiO2 | ZrO2 | SiO2 | SiO2 | SiO2 |
| Particle Diameter [nm] | 12 | 12 | 12 | 7 | 12 | 12 | 7 | 12 | 12 | 15 | 12 | 12 | 40 |
| Surface Modification Group | Amino | Amino | Amino | Hydroxy | Hydroxyl | Hexadecyl | Hydroxyl | Hydroxyl | Amino | Hydroxyl | Amino | Hydroxyl | Hydroxyl |
| Organic Resin | PMMA | PMMA | PMMA | PMMA | PMMA | PMMA | COP | PC | PS | COP | PMMA | PMMA | PMMA |
| Resin Concentration [vol%] | 31.8 | 28.0 | 25.4 | 30.6 | 29.1 | 32.8 | 17.9 | 35.4 | 31.5 | 29.0 | 22.2 | 75.7 | 50.2 |
| Fine Particle Concentration [vol%] | 48.2 | 25.0 | 38.6 | 27.4 | 25.9 | 29.2 | 28.1 | 31.6 | 38.5 | 26.0 | 64.8 | 19.3 | 44.8 |
| Porosity [vol%] | 20.0 | 47.0 | 36.0 | 42.0 | 46.0 | 38.0 | 54.0 | 33.0 | 30.0 | 45.0 | 13.0 | 5.0 | 5.0 |
| Coefficient of Linear Expansion [ppm/°C] | -110 | 15 | 11.7 | 5 | 8 | 20 | -103 | -10 | -31 | -20 | 24 | 47 | 27 |

As apparent from Table 1 and Fig. 1, when the porosity in the organic-inorganic composite molded product is 20 to 55 percent by volume, the average coefficient of linear expansion of the organic-inorganic composite molded product is decreased to 20*10⁻⁶/degree Celsius or less. In addition, as apparent from Table 1 and Fig. 2, when the fine particle concentration is 25 to 50 percent by volume, the average coefficient of linear expansion of the organic-inorganic composite molded product is decreased to 20*10⁻⁶/degree Celsius or less. From Fig. 2, it is found that the average coefficient of linear expansion of the organic-inorganic composite molded product is approximately proportional to the fine particle concentration. However, as in Comparative Example 1, when the fine particle concentration is more than 50 percent by volume, the porosity of the organic-inorganic composite molded product cannot be maintained at 20 percent by volume, and the coefficient of linear expansion is also adversely increased to 24*10⁻⁶ / degree Celsius.

In addition, as the surface modification groups of the fine particles, it is found that an amino group, a hydroxyl group, and a hexadecyl group each have a significant effect of decreasing the coefficient of linear expansion.

It is found that since having a coefficient of linear expansion lower than the coefficient of linear expansion in the past, the organic-inorganic composite molded product of the present invention is excellent as a constituent material of a low-expansion member and a temperature compensating member.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2011-133485 filed June 15, 2011 and No. 2012-096092 filed April 19, 2012, which are hereby incorporated by reference herein in their entirety.

## Claims

1. An organic-inorganic composite molded product comprising: inorganic fine particles having an average primary particle diameter of 1 to 30 nm; and
an organic resin,
wherein the concentration of the inorganic fine particles is 25 to 50 percent by volume, and
the porosity of the organic-inorganic composite molded product is 20 to 55 percent by volume.

2. The organic-inorganic composite molded product according to Claim 1,
wherein the average coefficient of linear expansion of the organic-inorganic composite molded product is 20*10⁻⁶ to -110*10⁻⁶/degree Celsius.

3. The organic-inorganic composite molded product according to Claim 1 or 2,
wherein the inorganic fine particles include SiO₂ or ZrO₂.

4. The organic-inorganic composite molded product according to Claim 1 or 2,
wherein the organic resin is a thermoplastic resin selected from a poly(methyl methacrylate) resin, a polycarbonate resin, a polystyrene resin, and a cyclic olefin resin.

5. An optical element comprising:
the organic-inorganic composite molded product according to one of Claims 1 to 4.

6. The optical element according to Claim 5,
wherein the optical element comprises a lens which transmits light.

7. The optical element according to Claim 5,
wherein the optical element comprises a reflective mirror which reflects light.

## Patentansprüche

1. Formprodukt aus organisch-anorganischem Verbundstoff, umfassend:
anorganische Feinteilchen mit einem mittleren Primärteilchendurchmesser von 1 bis 30 nm, sowie
ein organisches Harz;
wobei die Konzentration der anorganischen Feinteilchen 25 bis 50 Volumenprozent beträgt, und
die Porosität des Formprodukts aus organisch-anorganischem Verbundstoff 20 bis 55 Volumenprozent beträgt.

2. Formprodukt aus organisch-anorganischem Verbundstoff nach Anspruch 1,
wobei der mittlere lineare Ausdehnungskoeffizient des Formprodukts aus organisch-anorganischem Verbundstoff 20*10⁻⁶ bis -110*10⁻⁶/Grad Celsius beträgt.

3. Formprodukt aus organisch-anorganischem Verbundstoff nach Anspruch 1 oder 2,
wobei die anorganischen Feinteilchen SiO₂ oder ZrO₂ beinhalten.

4. Formprodukt aus organisch-anorganischem Verbundstoff nach Anspruch 1 oder 2,
wobei das organische Harz ein aus einem Polymethylmethacrylatharz, einem Polycarbonatharz, einem Polystyrolharz, und einem Cycloolefinharz ausgewähltes thermoplastisches Harz ist.

5. Optisches Element,
welches das Formprodukt aus organisch-anorganischem Verbundstoff nach einem der Ansprüche 1 bis 4 umfasst.

6. Optisches Element nach Anspruch 5,
wobei das optische Element eine Linse umfasst, die Licht durchlässt.

7. Optisches Element nach Anspruch 5,
wobei das optische Element einen reflektierenden Spiegel umfasst, der Licht reflektiert.

## Revendications

1. Produit moulé composite organique-inorganique comprenant : des particules fines inorganiques ayant un diamètre de particule primaire moyen de 1 à 30 nm ; et
une résine organique,
dans lequel la concentration en particules fines inorganiques est de 25 à 50 pour cent en volume, et
la porosité du produit moulé composite organique-inorganique est de 20 à 55 pour cent en volume.

2. Produit moulé composite organique-inorganique selon la revendication 1, dans lequel le coefficient moyen de dilatation linéaire du produit moulé composite organique-inorganique est de 20*10⁻⁶ à -110*10⁻⁶/degré Celsius.

3. Produit moulé composite organique-inorganique selon la revendication 1 ou 2,
dans lequel les particules fines inorganiques comprennent du SiO₂ ou du ZrO₂.

4. Produit moulé composite organique-inorganique selon la revendication 1 ou 2,
dans lequel la résine organique et une résine thermoplastique sélectionnée parmi une résine de poly(méthacrylate de méthyle), une résine de polycarbonate, une résine de polystyrène et une résine d'oléfine cyclique.

5. Élément optique comprenant :
le produit moulé composite organique-inorganique selon l'une des revendications 1 à 4.

6. Élément optique selon la revendication 5,
dans lequel l'élément optique comprend une lentille qui transmet la lumière.

7. Élément optique selon la revendication 5,
dans lequel l'élément optique comprend un miroir réfléchissant qui réfléchit la lumière.
